# EUROPÄISCHE PATENTSCHRIFT

(11) **EP 1 407 873 B1**
(45) Veröffentlichungstag und Bekanntmachung des Hinweises auf die Patenterteilung: **22.02.2006**
(21) Anmeldenummer: 03029291.6
(22) Anmeldetag: 14.12.2001
(51) Int. Cl.: B29C 49/34, B29C 35/18, B29C 49/00

(54) **Vorrichtung zur Herstellung von Wellrohren**
Apparatus for producing corrugated pipes
Dispositif pour produire des tuyaux ondulés

(30) Priorität: 21.03.2001 DE 20104922 U
(43) Veröffentlichungstag der Anmeldung: 14.04.2004
(62) Teilanmeldung aus: 01129884.1
(73) Patentinhaber: Drossbach GmbH & Co. KG, D-86641 Rain (DE)
(72) Erfinder: Dietrich, Karl, 86641 Rain am Lech (DE); Hurler, Michael, 86703 Rögling (DE)
(74) Vertreter: Altenburg, Udo

(56) Entgegenhaltungen:
- EP-A- 0 764 516
- DE-A- 4 338 990

## Beschreibung

Die vorliegende Erfindung betrifft eine Vorrichtung zur Herstellung von Wellrohren aus thermoplastischem Kunststoff, bei der in einem Kreislauf sich paarweise ergänzende Formbacken gemeinsam entlang einer sich an einen Spritzkopf anschließenden Formstrecke geführt, am Ende der Formstrecke auseinander gefahren und separat voneinander zu deren Anfang zurückgeführt werden, mit einer Formstreckeneinrichtung zur Bewegung der Formbacken entlang der Formstrecke und einem Rückförderer zur Rückförderung der Formbacken vom Ende der Formstrecke zu deren Anfang, wobei die Formstreckeneinrichtung einen Maschinentisch mit einer unteren Führung und unteren Antriebsmitteln für die Formbacken und einen am Maschinentisch befestigten Deckrahmen mit einer oberen Führung und oberen Antriebsmitteln für die Formbacken aufweist.

Bei solchen Wellrohranlagen vom so genannten Shuttle-Typ werden hin- und hergehende Rückförderer verwendet. Die Rückförderer können einen Greifarm besitzen, der eine am Ende der Formstrecke befindliche Formbacke greift, zum Anfang der Formstrecke fährt, die Formbacke dort absetzt und an die vorauseilende Formbacke aufschließt bzw. ansetzt sowie anschließend wieder an das Ende der Formstrecke fährt, um dort die nächste Formbacke zu greifen. Auf der Formstrecke selbst werden die Formbacken von separaten Antrieben, die zum einen auf dem Maschinentisch liegen und zum anderen am darüber liegenden Deckrahmen angeordnet sind, fortbewegt. Insbesondere ist es hierbei bekannt, im Maschinentisch und im darüber liegenden Deckrahmen Antriebsritzel vorzusehen, die in an den Formbacken oben und unten angeordnete Zahnstangen eingreifen und diese entsprechend vorwärts bewegen.

Die EP-A-0 764 516 offenbart eine Vorrichtung zur Herstellung von Rohren aus thermoplastischem Kunststoff mit Querprofilierung, die auf einer Formstrecke paarweise in Kreislauf geführte Formbacken aufweist. Es ist eine Transportvorrichtung zur Rückführung der Formbacken vorgesehen, die nach Art eines Brückenkranes ausgebildet ist. Auf einer die Formstrecke übergreifenden Transport-Brücke sind zwei quer zur Produktionsrichtung und gegensinnig zueinander verfahrbare Transport-Wagen vorgesehen, an denen jeweils ein nach unten gerichteter Transportarm mit einer Haltevorrichtung für je eine Formbacke angebracht ist.

Aus der US 5,510,071 ist weiter eine Wellrohranlage bekannt, bei der die Formbackenpaare in zwei Gruppen zusammengefasst sind. Eine erste Gruppe ist auf einem Schlitten gelagert, der an einem unteren Tragrahmen hin- und herfahrbar ist. Eine zweite Gruppe von Formbacken ist an einem Schlitten gelagert, der an einem oberen Tragrahmen eines Brückenkranes hin- und herfahrbar ist. Die Formbacken sind dabei jeweils auf Laufkatzen auseinander- und zusammenfahrbar. Um die Formbacken zurückzufahren, werden sie zunächst auf den Laufkatzen auseinander gefahren, sodann wird der Schlitten mit den auseinander gefahrenen Formbacken an den Formbacken des anderen Schlittens vorbei zurück zum Anfang der Formstrecke gefahren und schließlich werden die Formbacken auf dem Schlitten wieder zusammengefahren. Zur Kühlung der Formbacken können Kühlmittelschäuche vorgesehen sein.

Die EP 1 053 856 A2 offenbart eine Vorrichtung zur Herstellung von Kunststoff-Wellrohren, bei der die Formbacken auf der Formstrecke von feststehenden Halbkokillen aus Metall umschlossen werden, wobei die Halbkokillen mit einem feststehenden Kühlmittelsystem verbunden sind. Die Kühlung der Formbacken erfolgt dabei durch Wärmeübertragung von den Formbacken auf die gekühlten Halbkokillen.

Die FR-A-1 582 199 offenbart eine Vorrichtung zur Herstellung von Kunststoff-Wellrohren, bei der die Formbacken mit einem Vakuumsystem verbunden sind.

Hierzu sind fest mit den Formbacken verbundene Schläuche vorgesehen, die sind zusammen mit den Formbacken in einem Kreislauf bewegen.

Der vorliegenden Erfindung liegt die Aufgabe zugrunde, dass bei einer Vorrichtung zur Herstellung von Kunststoff-Wellrohren eine verbesserte und möglichst effiziente Kühlung der Formbacken zu erreicht werden soll.

Diese Aufgabe wird durch eine Vorrichtung gemäß Patentanspruch 1 gelöst. Die abhängigen Patentansprüche betreffen vorteilhafte Ausgestaltungen der Erfindung.

Gemäß der vorliegenden Erfindung ist eine direkte Kühlung der Formbacken vorgesehen. In die Formbacken abfließende Wärme von dem extrudierten Kunststoffrohr wird effizienter abgeführt und Wärmespannungen und -dehnungen der Formbacken besser kontrolliert. Vorzugsweise ist eine Kühlvorrichtung vorgesehen, die einen Kühlkreislauf und Andockmittel zum lösbaren Andocken des Kühlmittelkreislaufs an in den Formbacken ausgebildete Kühlmittelkanäle aufweist. Es sind also unmittelbar in den Formbacken Kühlmittelkanäle ausgebildet, die vom Kühlmittel durchströmt werden. Mittels der Andockmittel können die auf der Formstrecke befindlichen Formbacken an die Kühlvorrichtung angeschlossen werden. Kühlmittel kann durch die Formbacken auf der Formstrecke zirkuliert werden.

Die Kühlvorrichtung besitzt flexibel ausgebildete Kühlmittelschläuche, die mit den Formbacken kuppelbar sind, so dass die Kühlmittelschläuche mit den Formbacken über eine Strecke mitgeführt werden und Kühlmittel während der Formbackenbewegung auf der Formstrecke durch die Formbacken zirkuliert werden kann.

In Weiterbildung der Erfindung sind zum Anschliessen der maschinenseitigen Kühlvorrichtung an die Formbacken leckagefreie Kupplungen vorgesehen, die beim Andocken öffnen und beim Abdocken automatisch sowohl die formbackenseitigen Kühlmittelkanäle als auch die maschinentischseitigen Kühlmittelleitungen leckagefrei verschliessen. Hierdurch wird zum einen verhindert, dass Kühlmittelverunreinigungen auftreten. Zum anderen wird ermöglicht, dass das Kühlmittel nach Abdocken der maschinentischseitigen Kühlvorrichtung in den Formbacken verbleiben kann, um aus diesen weiter Wärme herauszuziehen, während die Formbacken auf der Rückförderstrecke sind. Sobald die Formbacken wieder auf die Formstrecke kommen, wird die Kühlvorrichtung wieder angedockt und das Kühlmittel ausgetauscht.

Vorzugsweise können die Formbacken Ausdehnspeicher besitzen, in die sich in formbackenseitigen Kühlmittelkanälen befindliches Kühlmittel ausdehnen kann, insbesondere nachdem die Kühlvorrichtung und damit der zirkulierende Kreislauf abgedockt ist.

In Weiterbildung der Erfindung kann die Kühlvorrichtung gleichzeitig als Heizvorrichtung zum Vorheizen der Formbacken Verwendung finden. Hierdurch wird die Anfahrzeit wesentlich verkürzt und der beim Anfahren der Maschine anfallende Ausschuss beträchtlich verringert.

Es ist weiter vorteilhaft vorgesehen, dass die Formstreckeneinrichtung und der Rückförderer voneinander separate Einheiten bilden, wobei als Rückförderer ein an einer Bodenplatte verankerter Portalroboter vorgesehen und die Fonnstreckeneinheit eine auf der Bodenplatte verfahrbare Einheit ist. Im Gegensatz zum Stand der Technik bilden der als Portalroboter ausgebildete Rückförderer und die Formstreckeneinrichtung mit Maschinentisch und Hauptantrieben keine gemeinsame Einheit. Überraschenderweise ergeben sich beträchtliche Vorteile, wenn die Formstreckeneinrichtung mit Maschinentisch, Führung für die Formbacken und Hauptantrieb für die Formbacken eine selbständige mobile Einheit bildet, die aus dem Portalroboter herausgefahren werden kann. Zum Beispiel ermöglicht es dies, die teuere Formstreckeneinrichtung zu verschiedenen Einsatzorten zu transportieren, um dort das Lager voll zu produzieren. Transport, Montage und Demontage vereinfachen sich beträchtlich.

Als Rückförderer kann insbesondere ein an sich bekannter Portalroboter Verwendung finden. Vorzugsweise kann der Portalroboter ein auf einander gegenüberliegenden Längsschienen gelagertes und an diesen angetriebenes ebenes Portal besitzen, das sich quer über die Formstrecke erstreckt und parallel zu dieser verfahrbar ist. An dem Portal können ein Paar Schlitten gelagert sein, die an diesem gegensinnig zueinander verfahrbar sind. An jedem der Schlitten ist zweckmässigerweise ein Greifarm angebracht, mit dem die rückzufordernden Formbacken gegriffen werden können.

Vorzugsweise ist jeder der Greifarme relativ zu dem Portal bzw. dem daran gelagerten Schlitten mittels eines Hubantriebes höhenverstellbar, so dass die gegriffenen Formbacken im wesentlichen senkrecht vom Maschinentisch abgehoben werden können. Im Gegensatz zum Stand der Technik muss zum Abheben nicht der Schlitten nach aussen gefahren werden, vielmehr kann der Formbacken unabhängig von den weiteren Bewegungsachsen des Portalroboters angehoben werden. Dies erlaubt es, unterschiedlich hohe Formbacken problemlos zu greifen. Die Formbacken können daher vorteilhafterweise an ihrer Oberseite im wesentlichen an einer durch den Schwerpunkt der jeweiligen Formbacke gehende Achse gegriffen werden, so dass keinerlei Dreh- und Kippmomente auf den Greifarm und den darüberliegenden Schlitten wirken.

In Weiterbildung der Erfindung ist eine elektronische Koppelung zwischen dem als Portalroboter ausgeführten Rückförderer und der Formstreckeneinrichtung vorgesehen, die die jeweilige Stellung der mobilen Formstreckeneinrichtung relativ zu dem Portalroboter berücksichtigt. Vorzugsweise ist eine Positionserfassungseinrichtung zur Erfassung der Relativposition von Maschinentisch und Rückförderer sowie eine mit der Positionserfassungseinrichtung verbundene zentrale Steuereinrichtung vorgesehen, die die Formstreckeneinrichtung und den Rückförderer in Abhängigkeit der erfassten Ausrichtung zueinander ansteuert. Diese elektronische Koppelung ersetzt eine mechanische Koppelung von Rückförderer und Maschinentisch.

Vorzugsweise ist die Formstreckeneinrichtung entlang einer vorgegebenen Achse, insbesondere entlang in die Bodenplatte eingelassener Schienen, verfahrbar. Die Positionserfassungseinrichtung kann dementsprechend einachsig ausgebildet sein. Vorzugsweise sind Absolutwertgeber vorgesehen, die einerseits die Stellung des Maschinentischs und daran befestiger Aufbauten und andererseits die Stellung des Portals, das sich parallel zu dem Maschinentisch verfahren lässt, angeben. Ferner kann ein Absolutwertgeber zur Erfassung der Position bzw. Stellung des Formbacken-Hauptantriebs auf dem Maschinentisch vorgesehen sein. Die Absolutwertgeber haben den Vorteil, dass auch nach einem Stromausfall stets die korrekten Positionsdaten zur Verfügung stehen und kein neues Einjustieren notwendig ist.

Um die Formstreckeneinrichtung besser transportabel zu machen, kann vorgesehen sein, dass der über dem Maschinentisch angeordnete Deckrahmen mit der oberen Führung und den oberen Antriebsmitteln für die Formbacken zum Maschinentisch hin eine Transportstellung absenkbar ist. Hierdurch wird die Höhe der über dem Maschinentisch befindlichen Aufbauten beträchtlich reduziert. Vorzugsweise ist der Deckrahmen auf vier am Maschinentisch befestigen Säulen gelagert, die motorisch angetrieben teleskopierbar, insbesondere in die genannte Transportstellung absenkbar sind.

Um die Anpassung der Formstreckeneinrichtung an verschieden grosse Formbacken zu erleichtern und es insbesondere zu ermöglichen, dass unterschiedlich hohe Formbacken verwendet werden, kann der Deckrahmen unabhängig von der genannten Absenkbarkeit in die Transportstellung zusammen mit den daran gelagerten Führungen und Antrieben höheneinstellbar relativ zum Maschinentisch sein. Hierzu können von dem genannten Hubantrieb zum Absenken in die Transportstellung separate Stelltriebe vorgesehen sein. Vorzugsweise ist der Deckrahmen zusammen mit den daran gelagerten Antrieben und Führungen über an den Säulen vorgesehene Gewindespindeln höheneinstellbar, insbesondere an den Säulen verschieblich gelagert. Die Säulen können durch ein über dem Deckrahmen angeordnetes Joch miteinander verbunden sein. Das genannte Joch kann zusammen mit den Säulen und dem Deckrahmen in die genannte Transportstellung abgesenkt werden.

Gemäß einem weiteren vorteilhaften Aspekt der vorliegenden Erfindung ist vorgesehen, dass die am Deckrahmen gelagerten oberen Antriebsmittel derart ausgebildet sind, dass sie eine Verschiebung der Formbacken senkrecht zum Maschinentisch zulassen. Hierdurch wird erreicht, dass eine Wärmedehnung der Formbacken in Richtung senkrecht zum Maschinentisch im Betrieb ausgeglichen wird. Im Gegensatz zum Stand der Technik, sind die Formbacken nicht zwischen den Antriebsritzeln der unteren, im Maschinentisch angeordneten Antriebsmittel und der oberen, am Deckrahmen gelagerten Antriebsmittel eingezwängt bzw. -gepasst. Grundsätzlich könnte zum Ausgleich der Wärmedehnungen vorgesehen sein, dass die oberen Antriebsritzel in der Höhe verstellbar angeordnet sind. Insbesondere jedoch ist vorgesehen, dass die oberen Antriebsritzel um vertikale, zum Maschinentisch senkrechte Achsen umlaufen und die an den Formbacken vorgesehenen oberen Zahnstangen entsprechend vertikal angeordnet sind, so dass sich die formbackenseitigen Zahnstangen in vertikaler Richtung relativ zu den Antriebsritzeln verschieben können. Der Eingriff zwischen Antriebsritzel und Zahnstange wird dabei nicht verändert, ein ruckfreier und präziser Antrieb ist gewährleistet.

Um die Formbacken, die am Anfang der Formstrecke wieder eingeschleust werden, passgenau mit den Antriebsritzeln in Eingriff zu bringen und insbesondere dafür zu sorgen, dass die Formbacken passgenau an die vorauseilenden Formbacken aufgeschlossen werden, ist vorteilhafterweise ein separater Hilfsantrieb am Maschinentisch vorgesehen. Der genannte Hilfsantrieb übernimmt die Formbacken, wenn diese von dem Portalroboter am vorderen Ende der Formstrecke am Maschinentisch abgesetzt werden und schiebt diese mit grösserer Geschwindigkeit als die vorauseilenden Formbacken in Vorschubrichtung. In Weiterbildung der Erfindung umfassen die am Anfang der Formstrecke vorgesehenen Einschubmittel eine Dämpfungseinrichtung, die den Stoss beim Aufschliessen der rückgeführten Formbacken an die vorauseilenden Formbacken dämpft. Besonders vorteilhaft ist es, wenn die Einschubmittel von mehreren Pneumatikzylindern gebildet werden, deren Kolbenstangen die Formbacken gegen die vorauseilenden Formbacken drücken. Die Pneumatikzylinder besitzen eine integrierte Dämpfung bereits aufgrund des verwendeten Druckmittels Luft. Hierdurch kann ein sanftes Aufschliessen der rückgeführten Formbacken erzielt werden.

In Weiterbildung der Erfindung kann am Ende der Formstrecke eine Parkstation für Sonderformbacken wie Muffenformbacken und dergleichen vorgesehen sein. Die entsprechenden Sonderformbacken können dort geparkt und von dem Rückförderer nur dann in den Maschinentakt eingespeist werden, wenn dies gewünscht ist. Wenn die Sonderformbacken eingespeist werden, wird das entsprechende nicht verwendete Formbackenpaar auf der Parkstation abgestellt. Der Tausch lässt sich besonders einfach bewerkstelligen, da die Parkstation unmittelbar auf dem Maschinentisch am Ende der Formstrecke vorgesehen ist, so dass dies einfach im normalen Takt des Rückförderers erfolgen kann.

Ferner kann am Ende der Formstrecke eine Wechselstation zum Einspeisen neuer Formbacken und Ausspeisen alter Formbacken in den bzw. aus dem Formbackenkreislauf beim Umrüsten der Maschine vorgesehen sein. Vorzugsweise ist die Wechselstation separat vom Maschinentisch ausgebildet. Insbesondere kann die Wechselstation einen verfahrbaren Wechseltisch aufweisen, der in den und aus dem Arbeitsbereich des Rückförderers, vorzugsweise an das dem Spritzkopf abgewandte Ende des Maschinentischs der Formstreckeneinrichtung gefahren werden kann. Hierzu können in der Bodenplatte Schienen quer zur Richtung der Formstrecke im Bereich deren Endes vorgesehen sein, auf denen der Wechseltisch verfahren werden kann. Die zu wechselnden Formbacken können mittels des Maschinentischs quer aus der Anlage herausgefahren und neue Formbacken wieder hineingefahren werden. Von dem eingefahrenen Wechseltisch nimmt der Rückförderer die Formbacken und speist sie am vorderen Ende der Formstrecke auf den Maschinentisch ein.

Nachfolgend wird die Erfindung anhand eines bevorzugten Ausführungsbeispieles und zugehöriger Zeichnungen näher erläutert. In den Zeichnungen zeigen:
- Fig. 1: eine Draufsicht auf eine Wellrohranlage nach einem bevorzugten Ausführungsbeispiel der vorliegenden Erfindung, die einen fest am Boden installierten Portalroboter und eine auf Schienen verfahrbare Formstreckeneinrichtung mit Maschinentisch und daran befestigen Aufbauten zeigt,
- Fig. 2: eine Seitenansicht der Wellrohranlage aus Figur 1, wobei die mobile Formstreckeneinrichtung von einem Spritzkopf weggefahren ist,
- Fig. 3: eine Frontansicht der Formstreckeneinrichtung und des diese überspannenden Portalroboters von der Spritzkopfseite her, und
- Fig. 4: eine Frontansicht der Wellrohranlage ähnlich Figur 3, wobei die Anlage in zwei Konfigurationen mit unterschiedlichen Formbackengrössen dargestellt ist..

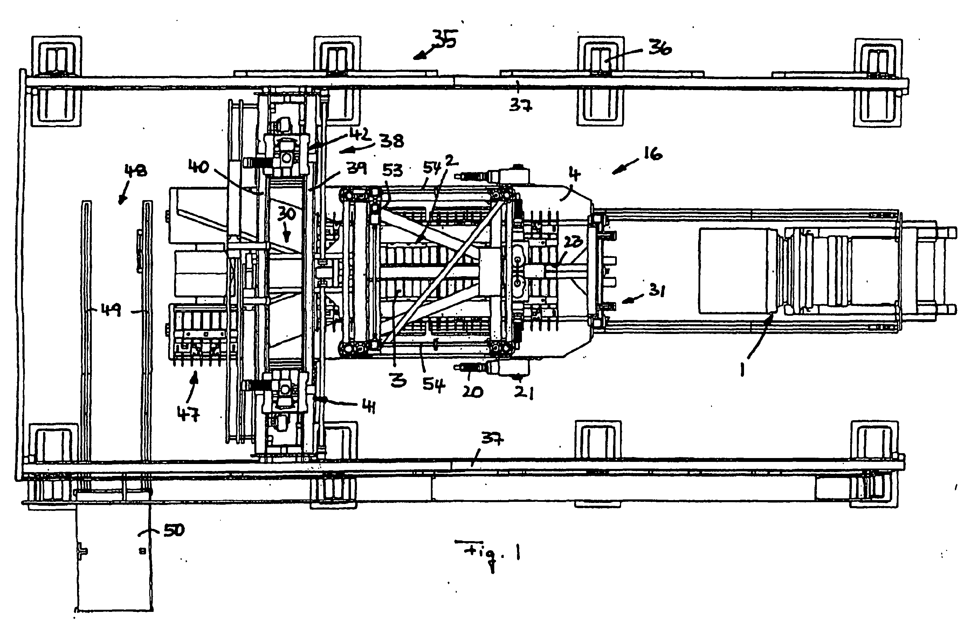

Figur 1 zeigt die einem Spritzkopf 1 nachgeschaltete Formstrecke 2, entlang derer ein aus dem Spritzkopf 1 austretender plastischer Kunststoffschlauch querprofiliert wird. Hierzu werden einander ergänzende Formbacken paarweise entlang der Formstrecke 2 auf dem Maschinentisch 4 geführt.

Der Maschinentisch 4 besitzt ein Fahrwerk 5, mit dem der Maschinentisch 4 auf in einer Bodenplatte 6 verankerten Schienen 7 verfahren werden kann. Wie Figur 1 zeigt, kann der Maschinentisch 4 in Arbeitsrichtung des Spritzkopfs 1 verfahren werden. Ein Verfahrantrieb für den Maschinentisch 4 kann grundsätzlich verschieden ausgebildet sein. Nach einer vorteilhaften Ausführung kann dies ein Kugelspindeltrieb sein. In Figur 1 ist der Maschinentisch 4 in seiner vom Spritzkopf 1 weggefahrenen Stellung gezeigt. Während des Betriebes ist der Maschinentisch 4 gemäß Figur 1 nach rechts verfahren, so daß die auf dem Maschinentisch 4 befindlichen Formbacken 3 zu dem Spritzkopf 1 eingefahren sind.

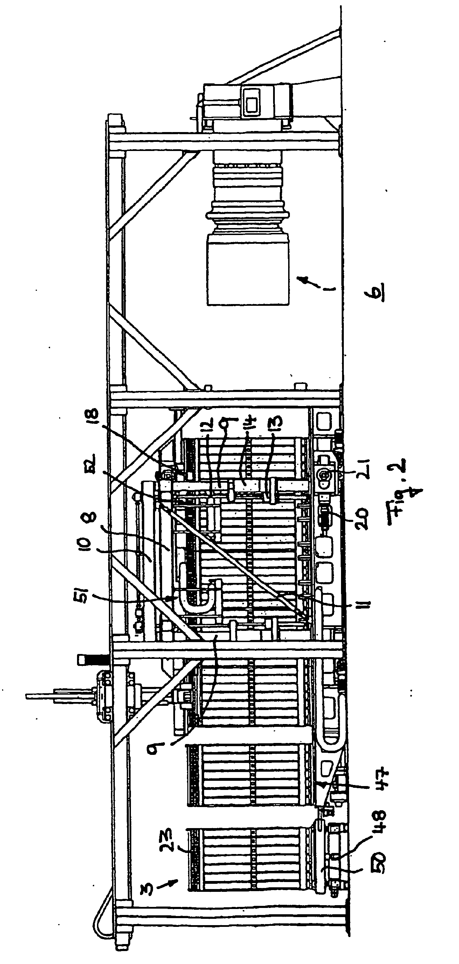

Über dem Maschinentisch 4 ist ein Deckrahmen 8 angeordnet. Wie die Figuren 1 und 2 zeigen, sind auf dem Maschinentisch 4 vier Säulen 9 verankert, an denen der Deckrahmen 8 verschieblich gelagert ist. Die Säulen 9 sind an ihrem oberen Ende durch ein Joch 10 miteinander verbunden. Das Joch 10 ist an den Säulen 9 starr befestigt. Zusätzlich ist das Joch 10 mittels zweier seitlich angeordneter, quer verlaufender Zuganker 11 am Maschinentisch 4 verankert, um Kräfte abzufangen, die von den am Deckrahmen 8 angeordneten oberen Antriebsmitteln, die noch erläutert werden, ausgeübt werden. Hierdurch wird eine Verwindung der Säulen 9 vermieden.

Wie Figur 2 zeigt, ist der Deckrahmen 8 an den Säulen 9 gleitend verschieblich gelagert. Er ist mittels vier Hubspindeln 12, die jeweils an den Säulen 9 angeordnet sind, abgestützt und höhenverstellbar. Der zugehörige Hubantrieb 53 ist auf der Oberseite des Jochs 10 angeordnet und über geeignete Getriebe auf die Hubspindeln geschaltet. Mittels Verbindungswellen 54 wird die Antriebsbewegung des Hubantriebs 53 synchron auf alle Hubspindeln übertragen (vgl. Figur 1).

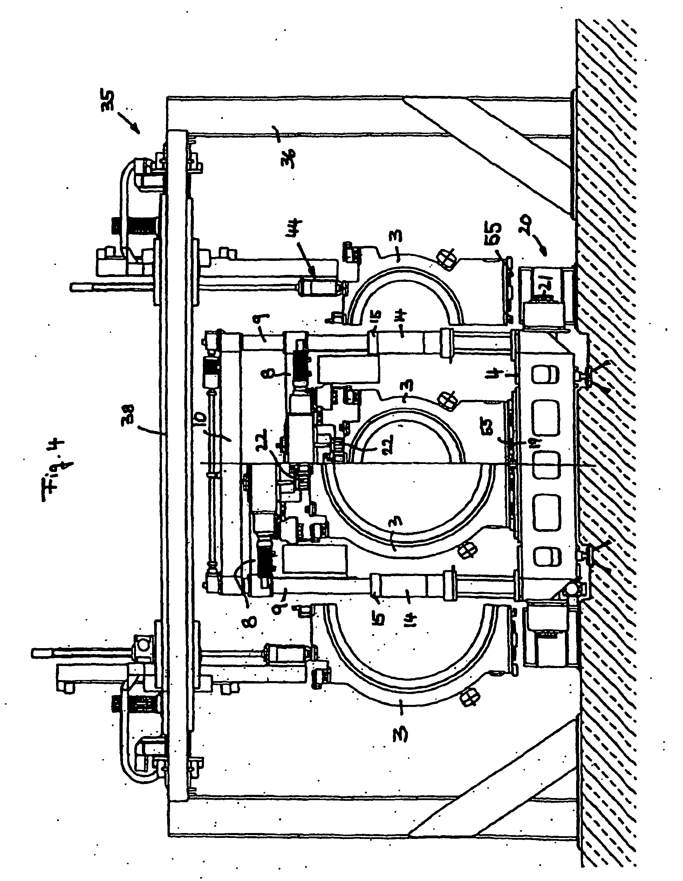

Dementsprechend kann der Deckrahmen relativ zu den Säulen 9 und relativ zum Joch 10 auf- und abgefahren werden, wie dies besonders Figur 4 verdeutlicht.

Zusätzlich kann der Deckrahmen 8 zusammen mit dem Joch 10 und der darauf angeordneten Aufbauten in eine Transportstellung zum Maschinentisch 4 hin abgesenkt werden. Wie Figur 2 zeigt, sind die Säulen 9 teleskopierbar ausgebildet. Mittels Teleskopierantrieben 13 in Form von Hubspindeln kann jede der Säulen 9 zusammenteleskopiert werden. Wie Figur 4 zeigt, sind in der ausgefahrenen Arbeitsstellung der Säulen 9 Stützmanschetten 14 um einen ausgefahrenen Teil der Säulen 9 gelegt. Die ausgefahrenen Säulen 9 können mit einem stufenförmigen Absatz 15, der gleichzeitig der Anlenkung der Hubspindeln dient, auf die Stützmanschetten 14 aufgefahren werden, so daß eine präzise und definierte Stellung der Säulen 9 im ausgefahrenen Zustand erreicht wird. Nach Entfernen der Stützmanschetten 14 kann der obere Teil der Säulen 9 abgesenkt werden, bis die stufenförmigen Absätze 15 auf den unteren Zylindern der Säulen 9 aufsitzen. Mit dieser zusätzlichen Absenkung in eine Transportstellung kann die insgesamte Höhe der Formstreckeneinrichtung, die insgesamt mit 16 bezeichnet ist, beträchtlich vermindert werden. Auch das starr an den Säulen 9 befestigte Joch 10 mit den daran befindlichen Aufbauten wird entsprechend abgesenkt. Dies erleichtert den Transport der Formstreckeneinrichtung 16 beträchtlich. Vor einem Absenken des Jochs 10 sind die daran befestigten Zuganker 11 zu lösen.

Zum Vorschub der Formbacken 3 auf dem Maschinentisch 4 ist ein Hauptantrieb vorgesehen, der untere Antriebsmittel 17, die im Maschinentisch integriert sind, und obere Antriebsmittel 18 umfaßt, die am Deckrahmen 8 gelagert sind. Wie Figur 4 zeigt, besitzen die unteren Antriebsmittel 17 vier Antriebsritzel 19, die um jeweils horizontale Achsen quer zur Längsrichtung der Formstrecke 2 antreibbar sind. Die unteren Antriebsritzel 19 sind paarweise zusammengefaßt und werden von seitlich am Maschinentisch 4 angeordneten Antrieben 20 angetrieben. Die Antriebe 20 sind jeweils über eine Getriebestufe 21 mit einer Antriebswelle gekoppelt, auf denen die Antriebsritzel 19 sitzen bzw. ausgebildet sind. Vorzugsweise sind die Antriebe 20 vom Maschinentisch 4 abmontierbar, um dessen Gesamtbreite beim Transport verkleinem zu können.

Wie Figur 4 zeigt, besitzen die auf dem Maschinentisch 4 anzutreibenden Formbacken 2 an ihrer Unterseite jeweils zwei Zahnstangen 55, in die die unteren Antriebsritzel 19 eingreifen können.

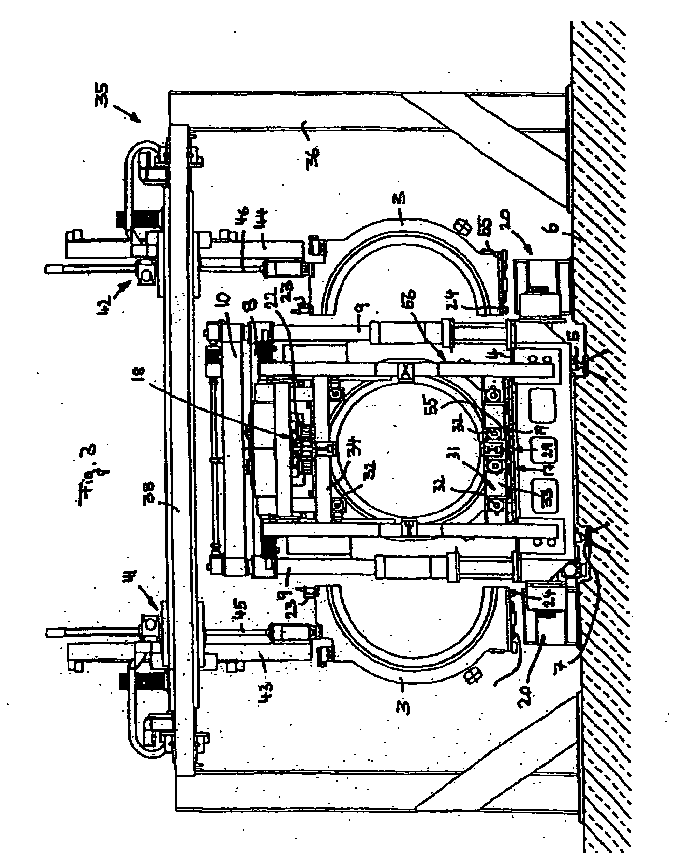

Wie Figur 3 zeigt, sitzen die unteren Antriebsmittel 17, wie auch die oberen Antriebsmittel 18, in der dem Spritzkopf 1 zugewandten Hälfte des Maschinentischs 4, der sich jedoch zum Spritzkopf hin über die Antriebsritzel hinaus erstreckt, so daß rückgeführte Formbacken vor den Antriebsritzeln auf dem Maschinentisch abgesetzt werden können, um sodann mit separaten Antriebsmitteln, wie noch erläutert wird, auf die Antriebsritzel 19 geschoben werden zu können.

Die oberen Antriebsmittel 18 am Deckrahmen 8 umfassen ein Paar voneinander beabstandeter obere Antriebsritzel 22, die um vertikale Drehachsen angetrieben werden können (vgl. Figur 4). Die oberen Antriebsritzel 22 können über entsprechende Antriebe und gegebenenfalls Getriebestufen angetrieben werden.

Die Formbacken 3 besitzen an ihren Oberseiten aufmontierte Zahnstangen 23, die in eine aufrechte Anordnung gekippt sind, so daß ihre Stirnseite dem Umfang der Antriebsritzel 22 zugewandt ist. Wie Figur 3 zeigt, sind die Zahnstangen 23 an der Oberseite der Formbacken 3 zur Außenseite hin orientiert, so daß sie bei sich paarweise ergänzenden Formbacken 3 zwischen den beiden Antriebsritzeln 22 hindurch laufen. Die von den Antriebsritzeln 22 ausgeübten Kräfte wirken damit auf die Formbacken 3 schließend. Die spezielle Anordnung der oberen Antriebsmittel 18 besitzt den großen Vorteil, daß Wärmedehnungen der Formbacken zugelassen und für den Antrieb unschädlich sind. Zwischen den Zahnstangen 23 und den oberen Antriebsritzeln 22 kann in vertikaler Richtung ein gewisser Versatz auftreten, ohne daß dies den Vorschub der Formbacken 3 behindern würde.

Zur Führung der Formbacken entlang der Formstrecke 2 ist zum einen auf dem Maschinentisch 4 eine Führungsleiste 29 vorgesehen, die vorzugsweise ein T-förmiges Profil aufweisen kann. Die Formbacken 3 besitzen an ihrer Unterseite hinterschnittene Führungsvorsprünge 24, mit denen sie die Führungsleiste 29 auf dem Maschinentisch 4 untergreifen können. Hierdurch wird eine zusätzliche Sicherheit erreicht. Ferner können zusätzliche Führungsrollen am Maschinentisch vorgesehen sein.

An der Oberseite der Formbacken 3 ist ebenfalls eine Längsführung vorgesehen. Insbesondere können am Deckrahmen 8 und der Oberseite der Formbacken 3 Führungsrollen und eine zugehörige Führungsleiste vorgesehen sein.

Die Führungen am Maschinentisch 4 und am Deckrahmen 8 gabeln sich zum Ende der Formstrecke hin V-förmig, so daß die Formbacken am Ende der Formstrecke auseinandergedrückt und von dem Wellrohr abgehoben werden. Die V-förmige Gabelung 30 der Führungen auf dem Maschinentisch 4 ist in Figur 1 dargestellt.

Am vorderen, dem Spritzkopf 1 zugewandten Ende des Maschinentischs 4 sind Hilfsvorschubmittel 31 vorgesehen, die eine Einschubvorrichtung für rückgeführte Formbacken 3 bildet. Die rückgeführten Formbacken 3 werden am vorderen Ende des Maschinentischs 4 auf diesem abgesetzt, so daß sie noch nicht im Eingriff mit den Antriebsritzeln 19 bzw. 22 sind. Wie die Figuren 1 und 3 zeigen, sind Pneumatikzylinder 32 vorgesehen, deren Arbeitsrichtung parallel zu der Formstrecke 2 liegt. Die Pneumatikzylinder 32 sind am mit dem Maschinentisch 4 verbundenen Stimrahmen 56 angeordnet. Wie Figur 3 zeigt, sind an einem Querträger 33 des Stimrahmens, der am vorderen Ende des Maschinentischs 4 knapp über dessen Oberfläche angeordnet ist, vier Pneumatikzylinder 32 angeordnet. An einem oberen Querträger 34 des Stirnrahmens 56 sind zwei weitere Pneumatikzylinder 32 angeordnet. Bei Betätigung der Pneumatikzylinder 32 kann ein auf dem vorderen Ende des Maschinentischs 4 abgesetztes Formbackenpaar 3 an ein bereits auf der Formstrecke 2 befindliches, vorauseilendes Formbackenpaar aufgeschossen werden. Die Pneumatikzylinder 32 schieben hierzu das aufzuschließende Formbackenpaar gegen das vorauseilende Formbackenpaar. Die Pneumatikzylinder 32 wirken beim Aufschließen dämpfend und mindem einen möglichen Stoß zwischen dem nachgeschobenen und dem vorauseilenden Formbackenpaar.

Zur Rückförderung der am Ende der Formstrecke 2 befindlichen Formbacken 3 zum Anfang der Formstrecke 2 ist ein Portalroboter 35 vorgesehen, der fest auf der Bodenplatte 6 verankert ist und die Formstrecke 2 bzw. die Formstreckeneinrichtung 16 überspannt. Zu beiden Seiten der Formstrecke 2 sind jeweils entlang einer zur Formstrecke 2 parallelen Geraden eine Mehrzahl von Stützen 36 in der Bodenplatte 6 verankert. Auf den oberen Enden der Stützen 36 sitzen zwei zur Formstrecke 2 parallele Längsträger 37, auf denen ein die Formstrecke 2 überspannendes Portal 38 verfahrbar gelagert ist. Das Portal 38 ist eben ausgebildet. Wie Figur 1 zeigt, besteht das Portal 38 aus zwei Querträgern 39 und 40. Das Portal 38 ist in an sich bekannter Weise entlang des Längsträgern 37 gelagert und verfahrbar.

Auf dem Portal 38 sitzen zwei Querschlitten 41, 42, die auf dem Portal 38 gegenläufig verfahrbar sind. Die Querschlitten 41 und 42 können jeweils doppelt ausgebildet sein, so daß sie auf den Querträgern 39 und 40 sitzen. Jedem der Querschlitten 41 und 42 ist ein Schlittenantrieb 57, 58 zum Verfahren des Schlittens zugeordnet.

An jedem der Querschlitten 41 und 42 sitzt ein Greifarm 43, 44, der an dem jeweiligen Querschlitten höhenverstellbar gelagert ist. Jedem der Greifarme 43 und 44 ist ein Hubantrieb 45 und 46 zugeordnet, so daß die Greifarme 43 und 44 unabhängig von der Stellung des Schlittens senkrecht angehoben und abgesenkt werden können. Am Ende der Greifarme 43 und 44 sind vorzugsweise formschlüssig arbeitende Greifeinrichtungen vorgesehen, mit Hilfe derer Formbacken 3 an ihren Oberseiten, insbesondere an entsprechenden Bolzenköpfen, gegriffen werden können.

Mittels der Greifarme 43 und 44 greift der Portalroboter 35 ein Paar am Ende der Formstrecke 2 auseinandergefahrener Formbacken 3. Dies erfolgt vorzugsweise während der Auseinanderfahrbewegung der Formbacken 3 an der Gabelung 30. Zum Greifen der Formbacken durch den Portalroboter erfolgt ein zweiachsiges Aufsynchronisieren. Die Bewegung der Greifarme 43 und 44 werden sowohl in x-Richtung als auch in y-Richtung zur Bewegung der Formbacken synchronisiert. Die Greifarme des Portalroboters bewegen sich dabei also exakt entsprechend der Bewegung der Formbacken entlang der Gabelung 30. Zur Kompensation von Positionsungenauigkeiten der Formbacken z. B. in Folge von Wärmedehnungen sind in vorteilhafter Weise an den Greifarmen 43 und 44 Sensoren vorgesehen, die präzise die relative Position der Greifeinrichtungen an den Greifarmen zu den Formbacken, insbesondere deren Bolzenköpfe erfassen, insbesondere im letzten Abschnitt der Annäherung der Greifeinrichtungen an die Formbacken. Die mit den Sensoren verbundene Steuereinrichtung kann entsprechende Korrekturen der Bewegung der Greifarme veranlassen und Positionsungenauigkeiten der Formbacken in Folge von Wärmedehnungen und dergleichen kompensieren.

Die Formbacken 3 werden vom Portalroboter 35 vom Maschinentisch 4 abgehoben, seitlich am Maschinentisch 4 vorbei zurück zum Anfang der Formstrecke bewegt und am spritzkopfseiligen Ende des Maschinentischs 4 auf diesem wieder abgesetzt. Auf dem Maschinentisch abgesetzt, werden die Formbacken 3 von den Pneumatikzylindern 32 auf das vorauseilende Formbackenpaar aufgeschoben und in Eingriff mit den Antriebsritzeln 19 und 22 gebracht.

Wie Figur 1 und Figur 2 zeigen, ist der Maschinentisch 4 nach hinten hin über den Formbackenentnahmebereich, in dem der Portalroboter 35 am Ende der Formstrecke die Formbacken 3 greift, hinaus verlängert. Er bildet an seinem dem Spritzkopf 1 abgewandten Ende eine Parkstation 47 für Sonderformbacken wie z. B. Muffenformbacken etc., die nur zu gegebener Zeit in den Formbackenkreislauf eingespeist werden müssen. Zum Einspeisen des auf der Parkstation 47 geparkten Formbackenpaares greift der Portalroboter 35 dieses und setzt es am vorderen Ende des Maschinentischs 4 ab. Das unterdessen am Ende der Formstrecke 2 auf dem Maschinentisch ausgeschobene Formbackenpaar fährt einfach entlang der sich gabelnden Führung 30 weiter auseinander und wird vom Portalroboter schließlich in der Parkstation 47 abgestellt. Vorteilhafterweise liegt die Parkstation unmittelbar auf dem Maschinentisch 4. Der Portalroboter greift sodann einfach das nächste Formbackenpaar 3, um dieses zurück an das spritzkopfseitige Ende des Maschinentischs zu fördern und dort abzusetzen. Durch die Anordnung der Parkstation auf dem Maschinentisch 4 vereinfacht sich das Ein- und Ausschleusen von Sonder formbacken beträchtlich. Der Portalroboter 35 erledigt das Ein- und Ausschleusen.

Wie Figur 1 zeigt, ist am rückwärtigen, dem Spritzkopf 1 abgewandten Ende der Anlage, eine Wechselstation 48 vorgesehen. In der Bodenplatte 6 sind quer verlaufende Schienen 49 verankert, auf denen ein Wechseltisch 50 ein- und ausfahrbar ist. In seiner in den Arbeitsbereich des Portalroboters 35 eingefahrenen Stellung liegt der Wechseltisch 50 etwa am Ende des Verfahrbereichs des Maschinentischs 4, wenn dieser von dem Spritzkopf 1 weggefahren ist. Mit Hilfe des Wechseltischs 50 können neue Formbacken zum Umrüsten der Maschine eingefahren werden. Vom Wechseltisch 50 nimmt der Portalroboter 35 jeweils eingefahrene Formbacken, um sie am dem Spritzkopf 1 zugewandten Ende des Maschinentischs 4 auf diesem abzusetzen. Zum Ausschleusen der alten Formbacken nimmt der Portalroboter 35 am Ende der Formstrecke 2 befindliche Formbacken und setzt sie auf den leeren Wechseltisch 50 ab. Der Wechseltisch 50 ist vorzugsweise so groß ausgebildet, daß zumindest ein Paar Formbacken darauf abgestellt werden kann.

Das Zusammenspiel zwischen dem Maschinentisch 4 bzw. der gesamten Formstreckeneinrichtung 16 und dem hiervon separaten Portalroboter 35 wird durch eine zentrale Steuereinrichtung gesteuert. Um zu wissen, in welcher Anordnung die Formstreckeneinrichtung 16 und der Portalroboter 35 relativ zueinander stehen, ist eine Positionserfassungseinrichtung vorgesehen. Der Maschinentisch 4 kann vorzugsweise mittels einer Kugelspindel entlang der im Boden verankerten Schienen 7 verfahren werden. Der Kugelspindel bzw. deren Antrieb ist ein Absolutwertgeber zugeordnet, der stets die Stellung des Maschinentischs 4 präzise angibt. Ferner besitzt die Positionseinrichtung einen Absolutwertgeber, der dem Antrieb des Portals 38 zugeordnet ist. Hieraus kann die Steuereinrichtung stets exakt die relative Stellung von Formstreckeneinrichtung und Portalroboter zueinander bestimmen. Insbesondere kann die Steuereinrichtung den Portalroboter 35 derart steuern, daß dieser die Formbacken 3 während deren Bewegung auf dem Maschinentisch 4 greift. Die Rückführung der Formbacken 3 erfolgt daher ohne jegliche Unterbrechung des Vorgangs.

Wie Figur 2 zeigt, ist am oberen Deckrahmen 8 eine Kühlvorrichtung 51 bzw. deren Andockmittel 52 gelagert. Die Kühlvorrichtung 51 besitzt leckagefreie Kupplungen, die ein Ankuppeln der auf der Formstrecke 2 befindlichen Formbacken 3 an die Kühlvorrichtung 51 erlaubt. In den Formbacken 3 selbst sind Kühlmittelkanäle ausgebildet, so daß eine direkte Kühlung der Formbacken 3 möglich ist. Die Kühlvorrichtung 51 bzw. deren formbackenseitigen Anschlüsse fahren mit den Formbacken 3 bei deren Bewegung auf dem Maschinentisch 4 entlang der Formstrecke 2 über ein Stück der Wegstrecke mit, so daß während der Bewegung auf der Formstrecke 2 Kühlmittel durch die Formbacken 3 zirkuliert werden kann. Am Ende der Formstrecke 2 kuppeln die leckagefreien Kupplungen der Kühlvorrichtung 51 ab. Das Kühlmittel verbleibt in den Formbacken 3.

## Patentansprüche

1. Vorrichtung zur Herstellung von Wellrohren aus thermoplastischem Kunststoff, bei der in einem Kreislauf sich paarweise ergänzende Formbacken (3) gemeinsam entlang einer sich an einen Spritzkopf (1) anschließenden Formstrecke (2) geführt, am Ende der Formstrecke auseinandergefahren und separat voneinander zu deren Anfang zurückgeführt werden, mit einer Formstreckeneinrichtung (16) zur Bewegung der Formbacken entlang der Formstrecke und einem Rückförderer (35) zur Rückförderung der Formbacken (3) vom Ende der Formstrecke zu deren Anfang,
wobei die Formstreckeneinrichtung (16) einen Maschinentisch (4) mit einer unteren Führung (29) und unteren, im Maschinentisch (4) integrierten Antriebsmitteln (17) für die Formbacken (3) und einen am Maschinentisch befestigten Deckrahmen (8) mit einer oberen Führung und oberen, am Deckrahmen (8) gelagerten Antriebsmitteln (18) für die Formbacken aufweist,
**dadurch gekennzeichnet, dass** eine Kühlvorrichtung (51) zur Kühlung der Formbacken (3) vorgesehen ist, die einen Kühlkreislauf und Andockmittel zum lösbaren Andocken des Kühlmittelkreislaufs an in den Formbacken ausgebildete Kühlmittelkanäle aufweist,
wobei die Kühlvorrichtung (51) derart beweglich ausgebildete Kühlmittelleitungen oder Kühlmittelschläuche aufweist, dass die angedockten Kühlmittelleitungen oder Kühlmittelschläuche über eine Strecke mit den bewegten Formbacken (3) mitführbar sind.

2. Vorrichtung gemäß Anspruch 1, wobei formbackenseitige Kühlmittelkanäle und maschinentischseitige Kühlmittelleitungen mit Kupplungen versehen sind, die beim Andocken automatisch öffnen sowie beim Abdocken automatisch die formbackenseitigen Kühlmittelkanäle und die maschinentischseitigen Kühlmittelleitungen verschließen.

3. Vorrichtung gemäß Anspruch 1 oder 2, wobei die Formbacken (3) Ausdehnspeicher besitzen, in die sich in formbackenseitigen Kühlmittelkanälen befindliches Kühlmittel ausdehnen kann.

4. Vorrichtung gemäß einem der vorhergehenden Ansprüche, wobei die Kühlvorrichtung (51) gleichzeitig als Heizvorrichtung zum Vorheizen der Formbacken ausgebildet ist.

5. Vorrichtung gemäß einem der vorhergehenden Ansprüche, wobei die Formstreckeneinrichtung (16) und der Rückförderer (35) voneinander getrennte Einheiten bilden, wobei als Rückförderer ein an einer Bodenplatte (6) verankerter Portalroboter (35) vorgesehen und die Formstreckeneinheit (16) eine auf der Bodenplatte (6) verfahrbare Einheit ist.

6. Vorrichtung gemäß einem der vorhergehenden Ansprüche, wobei eine Positionserfassungseinrichtung, insbesondere ein dem Maschinentisch (4) zugeordneter Absolutwertgeber, ein der entsprechenden Bewegungsachse des Portalroboters (35) zugeordneter Absolutwertgeber sowie ein den Antriebsmitteln zur Bewegung der Formbacken auf dem Maschinentisch zugeordneter Absolutwertgeber, zur Erfassung der Position des Maschinentisches (4) relativ zu dem Rückförderer (35), sowie eine mit der Positionserfassungseinrichtung verbundene zentrale Steuereinrichtung zur Ansteuerung der Formstreckeneinrichtung (16) und des Rückförderers (35) vorgesehen sind.

7. Vorrichtung gemäß einem der vorhergehenden Ansprüche, wobei der Portalroboter (35) ein ebenes Portal (38), das sich quer über die Formstrecke (2) erstreckt und parallel zu dieser verfahrbar ist, ein Paar Schlitten (41, 42), die an dem Portal gelagert und an diesem gegensinnig zueinander verfahrbar sind, sowie ein Paar an den Schlitten (41, 42) gelagerte Greifeinrichtungen (43, 44) aufweist, wobei die Greifeinrichtungen vertikal verfahrbar, insbesondere mittels eines Hubantriebs (45, 46) senkrecht zur Ebene des Maschinentischs (4) relativ zu dem jeweiligen Schlitten verfahrbar sind.

8. Vorrichtung gemäß einem der vorhergehenden Ansprüche, wobei am Anfang der Formstrecke (2) von dem Rückförderer (35) separate Einschubmittel (32) zum Aufschließen eines rückgeführten Formbackenpaares (3) an bereits auf der Formstrecke befindliche, vorauseilende Formbacken (3) vorgesehen sind, wobei die Einschubmittel (32) eine Dämpfungseinrichtung zur Dämpfung der Vorschubbewegung beim Anstoßen der rückgeführten Formbacken an die vorauseilenden Formbacken aufweisen.

9. Vorrichtung gemäß Anspruch 8, wobei die Einschubmittel von zumindest einem am Maschinentisch (4) gelagerten Pneumatikzylinder (32) gebildet sind.

10. Vorrichtung gemäß einem der vorhergehenden Ansprüche, wobei der Deckrahmen (8) relativ zum Maschinentisch (4) höhenverstellbar gelagert und mittels eines Hubantriebs (12) einstellbar ist.

11. Vorrichtung gemäß einem der vorhergehenden Ansprüche, wobei der Deckrahmen (8) zum Maschinentisch (4) hin in eine Transportstellung absenkbar ausgebildet, vorzugsweise mittels motorisch teleskopierbarer, am Maschinentisch befestigter Säulen (9) abgestützt ist

12. Vorrichtung gemäß einem der vorhergehenden Ansprüche, wobei in der Bodenplatte (6) Schienen (7) vorgesehen sind, auf denen die Formstreckeneinrichtung (16) vorzugsweise parallel zur Arbeitsrichtung des Spritzkopfes (1) verfahrbar ist.

## Claims

1. Apparatus for producing corrugated pipes of thermoplastic, in which mould blocks (3) complementing one another in pairs are directed together in a circuit along a moulding track (2) adjoining an extrusion head (1), are moved apart at the end of the moulding track and are returned separately from one another to the start of said moulding track, comprising a moulding-track arrangement (16) for moving the mould blocks along the moulding track and a return conveyor (35) for returning the mould blocks (3) from the end of the moulding track to its start, the moulding-track arrangement (16) having a machine table (4), with a bottom guide (29) and bottom drive means (17), integrated in the machine table (4), for the mould blocks (3), and a top frame (8) which is fastened to the machine table and has a top guide and top drive means (18), mounted on the top frame (8), for the mould blocks, **characterized in that** a cooling device (51) is provided for cooling the mould blocks (3) and has a cooling circuit and docking means for releasably docking the coolant circuit with coolant passages formed in the mould blocks, the cooling device (51) having coolant lines or coolant hoses which are designed to be movable in such a way that the docked coolant lines or coolant hoses can be carried for a distance along with the moving mould blocks (3).

2. Apparatus according to Claim 1, coolant passages on the mould-block side and coolant lines on the machine-table side being provided with couplings which automatically open during the docking and also automatically close the coolant passages on the mould-block side and the coolant lines on the machine-table side during the undocking.

3. Apparatus according to Claim 1 or 2, the mould blocks (3) having expansion reservoirs, into which coolant located in coolant passages on the mould-block side can expand.

4. Apparatus according to one of the preceding claims, the cooling device (51) at the same time being designed as a heating device for preheating the mould blocks.

5. Apparatus according to one of the preceding claims, the moulding-track arrangement (16) and the return conveyor (35) forming units which are separate from one another, a gantry robot (35) anchored in the base plate (6) being provided as return conveyor, and the moulding-track unit (16) being a unit which is traversable on the base plate (6).

6. Apparatus according to one of the preceding claims, there being provided a position-detecting device, in particular an absolute encoder assigned to the machine table (4), an absolute encoder assigned to the corresponding motion axis of the gantry robot (35) and an absolute encoder assigned to the drive means for moving the mould blocks on the machine table, for detecting the position of the machine table (4) relative to the return conveyor (35), and also a central control device connected to the position-detecting device for activating the moulding-track arrangement (16) and the return conveyor (35).

7. Apparatus according to one of the preceding claims, the gantry robot (35) having a flat gantry (38) which extends transversely across the moulding track (2) and is traversable parallel to the latter, a pair of carriages (41, 42) which are mounted on the gantry and are traversable on the latter in opposite directions to one another, and a pair of gripping devices (43, 44) mounted on the carriages (41, 42), the gripping devices being vertically traversable, in particular traversable by means of a lifting drive (45, 46) perpendicularly to the plane of the machine table (4) relative to the respective carriage.

8. Apparatus according to one of the preceding claims, push-in means (32) separate from the return conveyor (35) being provided at the start of the moulding track (2) for moving a returned mould-block pair (3) up to leading mould blocks (3) already located on the moulding track, the push-in means (32) having a damping device for damping the feed movement when the returned mould blocks strike the leading mould blocks.

9. Apparatus according to Claim 8, the push-in means being formed by at least one pneumatic cylinder (32) mounted on the machine table (4).

10. Apparatus according to one of the preceding claims, the top frame (8) being mounted so as to be vertically adjustable relative to the machine table (4) and being adjustable by means of a lifting drive (12).

11. Apparatus according to one of the preceding claims, the top frame (8) being designed to be lowerable towards the machine table (4) into a transport position, and preferably being supported by means of columns (9) which can be telescoped in a motor-operated manner and are fastened to the machine table.

12. Apparatus according to one of the preceding claims, rails (7) being provided in the base plate (6), on which rails (7) the moulding-track arrangement (16) is preferably traversable parallel to the working direction of the extrusion head (1).

## Revendications

1. Dispositif pour la fabrication de tubes ondulés en matière synthétique thermoplastique, dans lequel, durant un cycle, des mâchoires de moulage complémentaires par paires (3) sont guidées ensemble le long d'un trajet de moulage (2) raccordé à une tête d'injection (1), sont écartées l'une de l'autre à la fin du trajet de moulage et sont ramenées séparément l'une de l'autre au début de celui-ci, avec un dispositif de trajet de moulage (16) pour déplacer les mâchoires de moulage le long du trajet de moulage et avec un convoyeur de retour (35) pour ramener les mâchoires de moulage (3) de la fin du trajet de moulage au début de celui-ci, le dispositif de trajet de moulage (16) comportant une table de machine (4) avec un guidage inférieur (29) et avec des moyens d'entraînement inférieurs (17) intégrés à la table de machine (4) pour les mâchoires de moulage (3), et un châssis haut (8) fixé à la table de machine avec un guidage supérieur et des moyens d'entraînement supérieurs (18, 22) montés sur le châssis haut (8) pour les mâchoires de moulage, **caractérisé en ce qu'**il est prévu, pour refroidir les mâchoires de moulage (3), un dispositif de refroidissement (51) qui comporte un circuit de refroidissement et des moyens d'accouplement pour l'accouplement détachable du circuit d'agent de refroidissement à des canaux d'agent de refroidissement ménagés dans les mâchoires de moulage, le dispositif de refroidissement (51) comportant des conduites d'agent de refroidissement ou des flexibles d'agent de refroidissement conçus de manière mobile, de façon que les conduites d'agent de refroidissement ou les flexibles d'agent de refroidissement accouplés puissent accompagner les mâchoires de moulage (3) sur un certain trajet lors de leur déplacement.

2. Dispositif selon la revendication 1, des canaux d'agent de refroidissement côté mâchoires de moulage et des conduites d'agent de refroidissement côté table de machine étant munis de raccords qui, lors de l'accouplement, s'ouvrent automatiquement et, lors de la séparation, ferment automatiquement les canaux d'agent de refroidissement côté mâchoires de moulage et les conduites d'agent de refroidissement côté table de machine.

3. Dispositif selon la revendication 1 ou 2, les mâchoires de moulage (3) comportant des réservoirs de détente dans lesquels l'agent de refroidissement se trouvant dans des canaux d'agent de refroidissement côté mâchoires de moulage peut se détendre.

4. Dispositif selon une des revendications précédentes, le dispositif de refroidissement (51) étant en même temps conformé en dispositif de chauffage pour préchauffer les mâchoires de moulage.

5. Dispositif selon une des revendications précédentes, le dispositif de trajet de moulage (16) et le convoyeur de retour (35) formant des ensembles séparés l'un de l'autre, et le convoyeur de retour prévu étant un robot portique (35) scellé à un socle (6), et l'ensemble de trajet de moulage (16) étant un ensemble déplaçable sur le socle (6).

6. Dispositif selon une des revendications précédentes, un dispositif de détection de position, en particulier un indicateur de valeur absolue associé à la table de machine (4), un indicateur de valeur absolue associé à l'axe de déplacement correspondant du robot portique (35) ainsi qu'un indicateur de valeur absolue associé aux moyens d'entraînement chargés du déplacement des mâchoires de moulage sur la table de machine, pour détecter la position de la table de machine (4) par rapport au convoyeur de retour (35), ainsi qu'un dispositif central de commande connecté au dispositif de détection de position pour commander le dispositif de trajet de moulage (16) et le convoyeur de retour (35) étant prévus.

7. Dispositif selon une des revendications précédentes, le robot portique (35) comportant un portique plan (38) qui s'étend transversalement au-dessus du trajet de moulage (2) et peut se déplacer parallèlement à celui-ci, une paire de chariots (41, 42), qui sont montés sur le portique et peuvent se déplacer sur celui-ci dans des directions opposées l'une à l'autre, ainsi qu'une paire de dispositifs preneurs (43, 44) montés sur les chariots (41, 42), les dispositifs preneurs étant déplaçables verticalement, en particulier déplaçables perpendiculairement au plan de la table de machine (4) par rapport au chariot correspondant au moyen d'une commande de levage (45, 46).

8. Dispositif selon une des revendications précédentes, au début du trajet de moulage (2) étant prévus des moyens de poussée (32) séparés du convoyeur de retour (35) pour rapprocher une paire de mâchoires de moulage ramenée (3) de mâchoires de moulage précédentes (3) se trouvant déjà sur le trajet de moulage, les moyens de poussée (32) comportant un dispositif d'amortissement pour amortir le mouvement d'avance lors du contact des mâchoires de moulage ramenées avec les mâchoires de moulage précédentes.

9. Dispositif selon la revendication 8, les moyens de poussée étant formés par au moins un vérin pneumatique (32) monté sur la table de machine (4).

10. Dispositif selon une des revendications précédentes, le châssis haut (8) étant monté avec une possibilité de réglage en hauteur par rapport à la table de machine (4) et pouvant être réglé au moyen d'une commande de levage (12).

11. Dispositif selon une des revendications précédentes, le châssis haut (8) étant conçu pour pouvoir descendre en direction de la table de machine (4) jusqu'à une position de transport, de préférence en prenant appui sur des colonnes à mouvement télescopique motorisé (9) fixées à la table de machine.

12. Dispositif selon une des revendications précédentes, dans le socle (6) étant prévus des rails (7) sur lesquels le dispositif de trajet de moulage (16) peut se déplacer, de préférence parallèlement à la direction de travail de la tête d'injection (1).
